# EUROPEAN PATENT SPECIFICATION

(11) **EP 2 900 439 B1**
(45) Date of publication and mention of the grant of the patent: **03.05.2017**
(21) Application number: 13709868.7
(22) Date of filing: 12.03.2013
(51) Int. Cl.: B26D 3/28, B26D 7/06, B26D 1/03, B26D 1/00, B26D 7/26, A23L 19/18

(54) **APPARATUS FOR CUTTING POTATO SLICES, AND METHOD OF MANUFACTURING POTATO CHIPS**
VORRICHTUNG ZUM SCHNEIDEN VON KARTOFFELSCHEIBEN UND VERFAHREN ZUR HERSTELLUNG VON KARTOFFELCHIPS
APPAREIL POUR DÉCOUPER DES TRANCHES DE POMMES DE TERRE ET PROCÉDÉ DE FABRICATION DE FRITES

(30) Priority: 28.09.2012 GB 201217414
(43) Date of publication of application: 05.08.2015
(73) Proprietor: Frito-Lay Trading Company GmbH, 3011 Berne (CH)
(72) Inventor: KHAN, Ahmed Nadim, Burton-on-Trent Staffordshire DE14 1RW (GB); DE BRUYNE, Chris, B-8630 Veurne (BE); VANDECASTEELE, Nico, B-8630 Veurne (BE); LINGARD, Neal, Leicester Leicestershire LE8 4DH (GB); BUTT, Brian, Lincoln Lincolnshire (GB); O'BRIEN, John, Anstey Leicestershire LE7 7EX (GB); MCDONNELL, Joe, Loughborough Leicestershire LE11 4QT (GB)
(74) Representative: Jenkins, Peter David
(86) International application number: PCT/EP2013/054930
(87) International publication number: WO 2014/048582

(56) References cited:
- GB-A- 2 172 185
- US-A1- 2009 202 694
- US-A1- 2010 015 312

## Description

### Background to the Invention

The present invention relates to a potato slice cutting head and to a method of producing potato chips using a potato slice cutting head.

### Description of the Prior Art

It is well known to employ a rotary cutting apparatus for cutting potatoes into fine slices for the manufacture of potato chips. A well-known cutting apparatus, which has been used for more than 50 years, comprises an annular-shaped cutting head and a central impeller assembly coaxially mounted for rotation within the cutting head to deliver food products, such as potatoes, radially outwardly toward the cutting head.

A series of knives is mounted annularly around the cutting head and the knife cutting edges extend substantially circumferentially but slightly radially inwardly towards the impeller assembly. Each knife blade is clamped to the cutting head to provide a gap, extending in a radial direction, between the cutting edge of the blade and the head. The gap defines the thickness of the potato slices formed by the cutter. For instance, an apparatus for cutting potato slices according to the preamble of claim 1 is known from the patent US 2010/015 312 A1.

In the manufacture of potato chips, the potatoes are cut into slices and, after cooking, for example by frying, and seasoning potato chips are produced which then are packaged for the consumer.

One problem with current manufacturing methods and apparatus is that sometime a small proportion of the potato chips have a maximum width dimension that the potato chips can be difficult to package. Typically, a measured amount of the potato chips is filled into a package which comprises a flexible bag, of selected dimensions, for packaging a defined weight of the potato chips. The bag is filed by, for example, a known vertical form, fill and seal (VFFS) machine. During the filling step, the package has an upper opening presenting a maximum width dimension, most typically a diameter of the opening, through which the potato chips are filled downwardly into the bag under gravity.

If the potato chips are too large in dimension, it is difficulty to fill the bag reliably and at high speed. Intermittently, some of the potato chips may inadvertently become tapped in the upper seal of the bag, which compromises product quality. In some cases, up to about 0.5 % of the packages can be wasted because of this phenomenon. In addition, consumers may purchase faulty packaged products, which may lead to undesired consumer complaints.

Furthermore, large potato slices can reduce the ability of a given weight of potato chips to pack together in a package. This can require the packaging line speed to be reduced, which increases the production costs and lowers the production efficiency. Additionally, the package volume needs to be enlarged to be able to accommodate the poor chip packing density.

In order to attempt to alleviate the problems of excessively large potato chips, it is known to use grade potatoes prior to processing in order to ensure that the potatoes are sufficiently small that these packaging problems are minimized. The grading may be manual or automated. However, the use of small potatoes reduces the productivity and efficiency of the potato chip manufacturing process. Also, the production line cost is increased.

Also, there is an increasing desire to use large potatoes to manufacture potato chips in order to increase the productivity and efficiency of the potato chip manufacturing process. Large potatoes are agronomically more productive with a higher yield per acre of crops. There are some potato varieties which are used to manufacture other potato products, such as French fries, but which cannot efficiently be used to manufacture potato chips using known potato chip manufacturing apparatus and processes because the potatoes are too large.

If potatoes are used which are too large for the cutting head to process, it is known to use a "grader halver" upstream of the potato slicer. The grader halver cuts the potatoes in half prior to slicing in order to reduce the slice dimensions. There are a number of problems with the use of potato halvers. First, the production line cost is increased. Second, the grader halvers are not very efficient and can reduce production speeds. Third, the presence of potato chips with straight edges in a package of potato chips is generally not acceptable to the consumer.

It is also known to use packaging machines with "chip breakers" which remove or break up excessively large potato chips immediately upstream of the packaging machine. However, this causes product waste and/or can also produce a large number of crumbs or small pieces which again are generally not acceptable to the consumer.

### Summary of the Invention

The present invention aims at least partially to overcome at least some of these problems of the known methods and apparatus for manufacturing potato slices and potato chips made therefrom.

Accordingly, the present invention provides an apparatus for cutting potato slices, the apparatus comprising an annular-shaped cutting head and a central impeller coaxially mounted for rotation within the cutting head for delivering potatoes radially outwardly toward the cutting head, the impeller having a base with an upper surface across which potatoes are, in use, delivered to the cutting head, a plurality of knives serially mounted annularly around the cutting head, each knife having a first cutting edge extending substantially vertically and spaced from the cutting head to provide a gap, extending in a radial direction, between the first cutting edge and the cutting head, each knife also having a second cutting edge extending substantially horizontally and extending radially at least partly across the gap, the second cutting edge being located at least 50mm above the upper surface of the impeller to define a cutting zone for cutting a single potato slice between the upper surface of the impeller and the second cutting edge.

Optionally, the second cutting edge is located from 60mm to 90mm above the upper surface of the impeller. Further optionally, the second cutting edge is located from 70mm to 80mm above the upper surface of the impeller.

Optionally, the second cutting edge is orthogonal to the first cutting edge.

Optionally, the second cutting edge is located rearwardly of the first cutting edge, typically by a distance of at least 1mm, more typically from 4 to 10 mm, typically about 8 mm.

Optionally, in each knife the first and second cutting edges are formed on respective first and second knife elements.

Typically, the first knife element comprises an elongate substantially planar blade removably clamped to the cutting head by an elongate clamping member mounted adjacent to the first knife element.

Typically, the second knife element comprises a blade portion extending substantially orthogonally from a base portion, the base portion being removably clamped to the cutting head by the elongate clamping member.

Optionally, the base portion is removably clamped against the first knife element.

In some preferred embodiments, the elongate clamping member includes a slot through which extends the blade portion of the second knife element.

Optionally, the slot is a closed slot located rearwardly of a leading edge of the elongate clamping member.

In some preferred embodiments, the elongate clamping member includes at least two slots spaced apart in a longitudinal direction along the elongate clamping member, each slot being provided for mounting the second knife element at a respective predetermined distance from the upper surface of the impeller. Alternatively, in other embodiments there is a single slot in the clamping member.

The present invention further provides a method of producing potato slices for the manufacture of potato chips, the method comprising the steps of:
a. providing a plurality of potatoes;
b. feeding the potatoes to a cutting head adapted to cut the potatoes into slices, the cutting head having a plurality of knives;
c. delivering each potato to a respective knife in the cutting head, the knife having a first cutting edge adapted to cut the potato into slices and a second cutting edge adapted to cut any potato slice having a width greater than a predetermined dimension into two slice portions, the two slice portions comprising a first slice portion having a first maximum width corresponding to the predetermined dimension and a second slice portion having a second maximum width smaller than the first maximum width;
d. cutting each potato into a plurality of slices by the first cutting edge; and
e. cutting each slice having a width greater than the predetermined dimension into the first and second slice portions by the second cutting edge.

Optionally, in step b the potatoes fed to the cutting head are initially uncut.

Optionally, the predetermined dimension is at least 50mm, further optionally from 60mm to 90mm, yet further optionally from 70mm to 80mm.

Typically, cutting steps d and e are carried out substantially simultaneously.

Preferably, cutting step e cuts the slice into only two slice portions.

Optionally, the plurality of potatoes provided in step a has a median potato diameter and the predetermined distance is greater than the median potato diameter so that at least 50%, further optionally at least 60%, of the slices produced after cutting steps d and e are uncut in step e.

Optionally, the cutting head is an annular-shaped cutting head and a central impeller is coaxially mounted for rotation within the cutting head for delivering potatoes radially outwardly toward the cutting head.

Optionally, the impeller has a base with an upper surface across which potatoes are, in use, delivered to the cutting head, and the knives are serially mounted annularly around the cutting head.

Optionally, each first cutting edge extends substantially vertically and is spaced from the cutting head to provide a gap, extending in a radial direction, between the first cutting edge and the cutting head, each second cutting edge extending substantially horizontally and extending radially at least partly across the gap.

Optionally, each second cutting edge is located at least 50mm above the upper surface of the impeller to define a cutting zone for cutting a single potato slice between the upper surface of the impeller and the second cutting edge

The present invention further provides a method of manufacturing potato chips, the method comprising the steps of:
i. producing a plurality of potato slices by the method according to any one of claims 4 to 9;
ii. cooking and seasoning the potato slices to produce flavored potato chips; and
iii. filling a measured amount of the potato chips into a package, wherein during the filling step the package has an opening presenting a maximum width dimension, and the potato chips have a maximum width which is no more than 90% of the maximum width dimension of the opening.

Typically, the potato chips have a maximum width which is no more than 80% of the maximum width dimension of the opening.

The present invention further provides a method of manufacturing potato chips, the method including the steps of:
a. providing a plurality of uncut potatoes which have been graded to provide a potato diameter distribution having a median potato diameter;
b. feeding the uncut potatoes to a cutting head adapted to cut the potatoes into slices;
c. in the cutting head cutting each potato into a plurality of slices; and
d. in the cutting head cutting each slice having a width greater than at least the median potato diameter into first and second slice portions so that at least 50% of the slices produced after cutting steps c and d are uncut in step d.

Typically, cutting steps c and d are carried out so that at least 60% of the slices produced after cutting steps c and d are uncut in step d.

Optionally, in cutting step d each slice having a width greater than 70mm, or 60mm, or 50 mm, is cut into first and second slice portions.

Optionally, cutting steps c and d are carried out substantially simultaneously.

Optionally, cutting step d cuts the slice into only two slice portions.

Optionally, the cutting head is an annular-shaped cutting head and a central impeller is coaxially mounted for rotation within the cutting head for delivering potatoes radially outwardly toward the cutting head.

Optionally, the impeller has a base with an upper surface across which potatoes are, in use, delivered to the cutting head.

Optionally, the cutting head has a plurality of knives serially mounted annularly around the cutting head, each knife having a first cutting edge cutting the slices in step c and a second cutting edge cutting the slices in step d.

Optionally, each first cutting edge extends substantially vertically and is spaced from the cutting head to provide a gap, extending in a radial direction, between the first cutting edge and the cutting head, each second cutting edge extending substantially horizontally and extending radially at least partly across the gap.

Optionally, wherein each second cutting edge is located at least 50mm above the upper surface of the impeller to define a cutting zone for cutting a single potato slice between the upper surface of the impeller and the second cutting edge.

Typically, the method further comprises the step of:
e. cooking and seasoning the potato slices from cutting steps c and d to produce flavored potato chips; and
f. filling a measured amount of the potato chips into a package, wherein during the filling step the package has an opening presenting a maximum width dimension, and the potato chips have a maximum width which is no more than 90% of the maximum width dimension of the opening.

Optionally, the potato chips have a maximum width which is no more than 80% of the maximum width dimension of the opening.

The preferred embodiments of the present invention provide a number of technical and commercial advantages and benefits over the known methods and apparatus for manufacturing potato slices and potato chips made therefrom.

First, the potato chips have a controlled maximum width dimension so that the potato chips are easier to package, particularly into flexible bags by use of a known vertical form, fill and seal (VFFS) machine. The bag can be filed reliably and at high speed. Packaging waste and consumer complaints can be reduced.

The packaging line speed can be high, which reduces the production costs and increases the production efficiency. There is very little additional capital cost or running cost by the introduction of the modified twin blade assembly used in the embodiments of the present invention.

Additionally, the package volume can be reduced for a given weight of product because of the increased chip packing density.

Furthermore, the upstream grading of potatoes prior to processing can be reduced or eliminated. There is no need to use grader halvers. The production line capital and running costs can be reduced.

Also, large potatoes can be used to manufacture potato chips in order to increase the productivity and efficiency of the potato chip manufacturing process. Some potato varieties which have not hitherto been used commercially in large volumes to manufacture potato chips efficiently can now be used to manufacture potato chips.

By controlling the dimensional location of the second cutting edge relative to the dimensions of the incoming potato population to be processed, an effective and efficient apparatus and process are provided which allow large potatoes to be used while minimizing the proportion of potato chips with straight edges in a package of potato chips. Also, "chip breakers" can be avoided, and product waste and/or excessive crumbs or small pieces can be minimized.

### Brief Description of the Drawings

Embodiments of the present invention will now be described, by way of example only, with reference to the accompanying drawings, in which:
Figure 1 is a schematic side view of a cutting head of a potato slice cutting apparatus in accordance with an embodiment of the present invention;
Figure 2 is a schematic side view of the cutting head of Figure 1 when used to cut potato slices showing the cutting operation on two differently sized potatoes;
Figure 3 is an exploded schematic perspective view of a knife assembly in the cutting head of Figure 1;
Figure 4 is a schematic perspective view of the knife assembly in the cutting head of Figure 1; and
Figure 5 is a schematic process flow chart which illustrates sequential steps during manufacture of potato chips in accordance with another aspect of the present invention.

### Detailed Description of the Preferred Embodiments

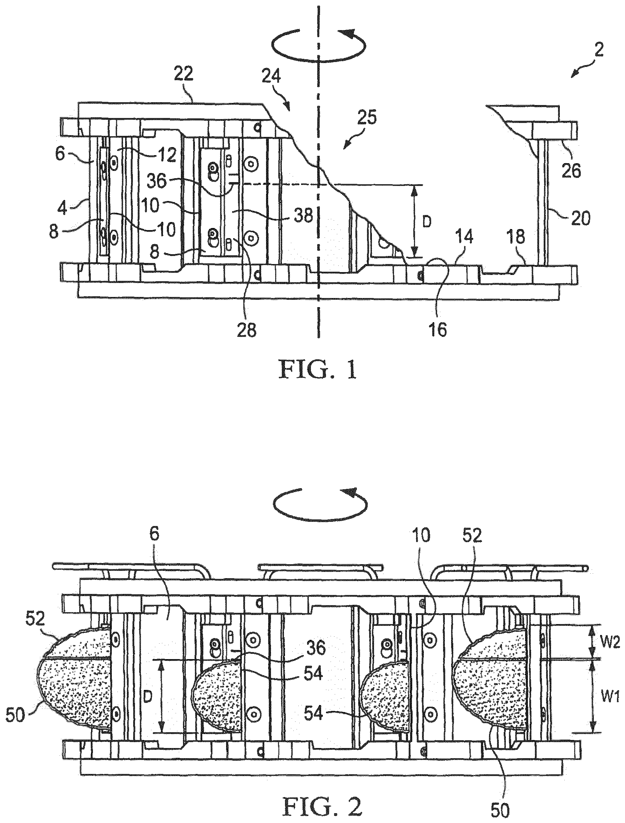

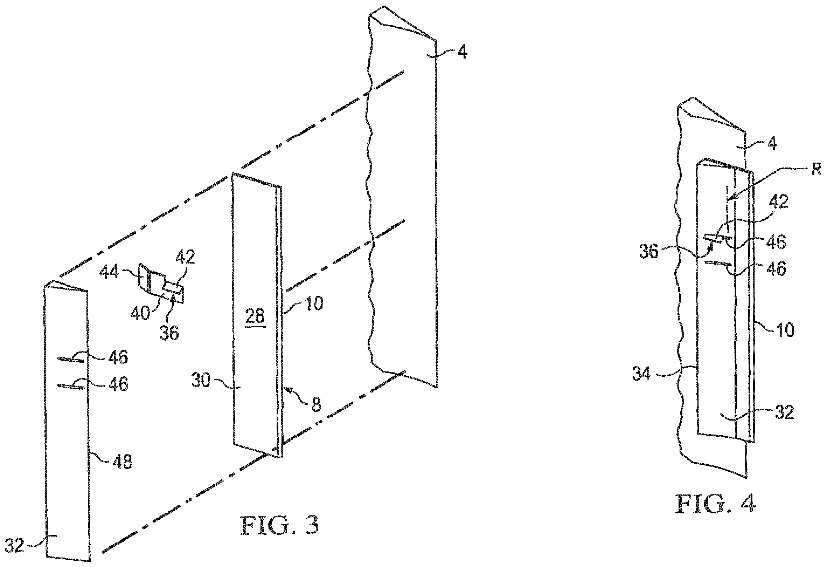

Referring to Figures 1 to 4, a potato slice cutting apparatus 2 in accordance with an embodiment of the present invention comprises an annular-shaped cutting head 4. The cutting head 4 includes a cylindrical wall 6 in which a plurality of knives 8 are serially mounted annularly around the cutting head 4. The knife cutting edges 10 extend substantially circumferentially but slightly radially inwardly. Each knife 8 has a first cutting edge 10 extending substantially vertically. The knife first cutting edges 10 extend substantially circumferentially but slightly radially inwardly. Each knife first cutting edge 10 is spaced from the cutting head 4 to provide a respective gap 12, extending in a substantially radial direction, between the first cutting edge 10 and the cutting head 4. The gap 12 defines a slice thickness to be cut by the potato chip cutting apparatus 2.

A central impeller 14 is coaxially mounted for rotation within the cutting head 4 for delivering potatoes radially outwardly toward the cutting head 4. The impeller 14 has a base 16 with an upper surface 18 across which potatoes are, in use, delivered to the cutting head 4. The base 16 is spaced from the lower edge 20 of the cylindrical wall 6. A cover 22 having a potato supply opening 24 is fitted to the upper edge 26 of the cylindrical wall 6. The cylindrical wall 6, base 16 and cover 22 define a central cavity 25.

The first cutting edge 10 is formed on a first knife element 28. The first knife element 28 comprises an elongate substantially planar blade element 30 removably and adjustably clamped to the cutting head 4 by an elongate clamping member 32 of a blade mount 34 adjacent to the first knife element 28. The exposed first cutting edge 10 points substantially circumferentially but is oriented radially inwardly, as is known in the potato chip cutter art. The width of the gap 12 can be varied by moving the first knife element 28 in the blade mount 34.

Each knife 8 also has a second cutting edge 36 extending substantially horizontally and extending radially at least partly across the gap 12. The second cutting edge 36 is located a predetermined distance D which is at least 50mm above the upper surface 18 of the impeller 14 to define a cutting zone 38 for cutting a single potato slice between the upper surface 18 of the impeller 14 and the second cutting edge 36.

Optionally, the second cutting edge 36 is located from 60mm to 90mm, typically from 70mm to 80mm, above the upper surface 18 of the impeller 14.

The second cutting edge 36 is preferably orthogonal to the first cutting edge 10; for example the first cutting edge 10 is vertically oriented and the second cutting edge 36 is oriented horizontally. The second cutting edge 36 is preferably located rearwardly of the first cutting edge 10, typically by a distance R of at least 1mm, optionally from 4 to 10 mm, typically about 8 mm. The second cutting edge 36 may extend parallel to the first cutting edge 10 or be inclined so as to extend rearwardly from second cutting edge 36.

The second cutting edge 36 is formed on a respective second knife element 40. The second knife element 40 comprises a blade portion 42 extending substantially orthogonally from a base portion 44. The base portion 44 is adjustably and removably clamped to the cutting head 4 by the elongate clamping member 32. In particular, the base portion 44 is removably clamped against the first knife element 28. The blade portion 42 of the second knife element 40 is preferably orthogonal to the first knife element 28; for example the first first knife element 28 is vertically oriented and the blade portion 42 of the second knife element 40 is oriented horizontally.

The elongate clamping member 32 includes a slot 46 through which extends the blade portion 42 of the second knife element 40. The slot 46 is a closed slot located rearwardly of a leading edge 48 of the elongate clamping member 32. In a particular embodiment, as illustrated, the elongate clamping member 32 includes at least two slots 46 spaced apart in a longitudinal direction along the elongate clamping member 32, each slot 46 being provided for mounting the second knife element 40 at a respective predetermined distance D from the upper surface 18 of the impeller 14. Alternatively, in other embodiments there is a single slot 46 in the clamping member 32 for mounting the blade portion 42 at a respective longitudinal position along the length of the clamping member 32.

In the illustrated embodiment, the knife 8 comprises a multiple knife assembly, with the first knife element 28 and the second knife element 40 being independent and separable. When two separable knife elements 28,40 are provided in each knife 8, the individual knife elements 28, 40 can be independently replaced when the respective blade become worn. Also, as disclosed above, the second knife element 40 can be selectively moved relative to the first knife element 28, in particular in the longitudinal direction of the first knife element 28, in order to vary the distance D without moving the first knife element 28.

In an alternative embodiment, the knife comprises a single knife assembly element, with the first knife element 28 and the second knife element 40 being bonded together, for example by welding, or unitary and integral.

Typically, the first knife element 28 and the second knife element 40 are composed of stainless steel.

In use, whole potatoes, typically previously uncut, to be sliced by the potato chip cutting apparatus 2 for the manufacture of potato chips are supplied into the central cavity 25. The potatoes are urged radially outwardly by the impeller 14 under the action of a centrifugal force and are individually retained against the inner cylindrical surface of the impeller 14. The radially outward surface of the potato is cut by the first cutting edge 10 of the knives 8 which rotate, together with the impeller 14 holding the potatoes, within the cylindrical wall 6 of the cutting head 4. This motion causes individual slices 54 sequentially to be cut from the potato by the serially mounted knives 8. Each slice 54 passes radially outwardly through the predetermined gap 12 between the first cutting edge 10 and the cutting head 4. The slices 54 fly radially outwardly from the cutting head 4 and are collected in known manner for subsequent processing, for example frying and seasoning to form potato chips.

The second cutting edge 36 longitudinally cuts any potato slice 54 having a width greater than the predetermined distance D into two slice portions 50, 52. The two slice portions 50, 52 comprise a first slice portion 50 having a first maximum width W1 corresponding to the predetermined distance D and a second slice portion 52 having a second maximum width W2 smaller than the first maximum width W1. Since only one second cutting edge 36 is provided in each knife 8, each slice 54 having a width greater than the predetermined distance D is cut into only two slice portions 50, 52.

The cutting into slices 54 by the first cutting edge 10 and the cutting of the slices 54 into two slice portions 50, 52 by the second cutting edge 36 are carried out substantially simultaneously.

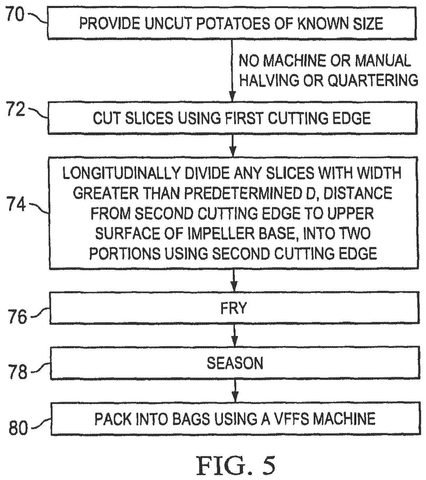

Referring to Figure 5, in the method of the invention a plurality of uncut potatoes is provided in step 70 which have been graded to provide a potato diameter distribution having a given median potato diameter. There is no machine or manual halving or quartering of the whole potatoes. The uncut potatoes are fed to the cutting head adapted to cut the potatoes into slices in step 72. In the cutting head, each potato is cut into a plurality of slices. Only those slices 54 having a width greater than at least the median potato diameter are additionally cut longitudinally into first and second slice portions 50, 52, as shown by step 74. After the cutting head slicing and cutting operations in steps 72 and 74, the potato slices are then fried in step 76, seasoned in step 78 and packaged into bags using a VFFS machine in step 80.

In the method of the invention, the predetermined distance D is dependent upon the dimensions of the specific population or batch of potatoes to be cut in the particular cutting operation. The aim is to set the predetermined distance D so that large potatoes can be processed by the potato chip cutting apparatus 2 to form potato slices, yet the resultant slices have a size distribution which (a) minimizes packaging losses while additionally (b) maximizing the number and proportion of slices which have been cut to form straight edges, by the cutting action of the second cutting edge 36, and (b) minimizes the number and proportion of small dimension slices. Potato chips with straight edges and an excessive number and proportion of small dimension potato chips in a package of potato chips is generally not acceptable to the consumer.

Typically, to meet this aim the plurality of potatoes initially provided for processing to form potato slices and then potato chips has a median potato diameter, and the predetermined distance D is greater than the median potato diameter. This technical relationship between the dimensions of the particular potatoes to be cut and the set-up of the potato chip cutting apparatus 2 can provide that at least 50% of the slices produced after the cutting steps of the first and second cutting edges 10, 36 are uncut. Preferably, the predetermined distance D is greater than the median potato diameter so that at least 60% of the slices produced after these cutting steps are uncut.

In the method of manufacturing potato chips of the embodiment of the invention, after the plurality of potato slices has been cut, the potato slices are cooked and seasoned to produce flavored potato chips. Thereafter, a measured amount of the potato chips is filled into a package. Typically, the package comprises a flexible bag, of selected dimensions, for packaging a defined weight of the potato chips. The bag is filed by, for example, a known vertical form, fill and seal (VFFS) machine. During the filling step, the package has an upper opening presenting a maximum width dimension, through which the potato chips are filled downwardly into the bag under gravity. In a preferred embodiment of the invention, the potato chips have a maximum width which is no more than 90% of the maximum width dimension of the opening. Typically, the potato chips have a maximum width which is no more than 80% of the maximum width dimension of the opening.

In the preferred embodiment of the invention, and referring again to Figure 5, a plurality of uncut potatoes is provided in step 70 which have been graded to provide a potato diameter distribution having a median potato diameter. There is no machine or manual halving or quartering of the whole potatoes. The uncut potatoes are fed to the cutting head adapted to cut the potatoes into slices in step 72. In the cutting head, each potato is cut into a plurality of slices. The cutting in the cutting head is carried out so that at least 50%, more preferably at least 60%, of the slices produced after the cutting steps, are uncut. Such a slice population is provided by setting the predetermined distance D so that only those slices having a width greater than at least the median potato diameter are additionally cut longitudinally into first and second slice portions 50, 52, as shown by step 74.

In one preferred embodiment, each slice having a width greater than 70mm is cut into first and second slice portions. In another preferred embodiment, each slice having a width greater than 60mm is cut into first and second slice portions. In a further preferred embodiment, each slice having a width greater than 50mm is cut into first and second slice portions. The selection of the particular predetermined distance D, for example in the embodiments above D being set at 70mm, 60mm or 50mm, is typically dependent on a dimensional analysis of the potato supply to be sliced, and typically the potato supply has been pre-graded to give a particular dimensional range.

Again, the aim is to provide sufficient longitudinal division of excessively large slices to minimize packaging waste while minimizing the production of longitudinally cut or excessively small slices by setting the predetermined distance D based upon the dimensional analysis of the potato supply. This setting can be achieved on a trial and error basis following an initial short run of a small population size representative of the larger population in a typical batch for commercial processing on a potato chip production line.

In the preferred embodiments, a particular cutting head is disclosed. However, the present invention can be utilized with a wide variety of different cutting head shapes and dimensions.

In addition, in the illustrated embodiment of the invention, the cutting head is stationary and the impeller rotates within the stationary cutting head. In alternative embodiments of the invention, the cutting head also rotates, and the impeller rotates within the rotating cutting head, with the cutting head and impeller either rotating in the same rotational direction but at different rotational speeds or rotating in opposite rotational directions.

Furthermore, the present invention can be utilized with various blade shapes and configuration, and accordingly the cutting head can be used with linear planar blades, such as for manufacturing conventional potato chips, or profiled blades, such as for manufacturing crinkle cut or other three dimensionally-shaped potato chips.

The cutting head of the preferred embodiments of the invention may be of the two ring or single ring type.

The present invention will now be illustrated further with reference to the following non-limiting Example.

### Example

A potato slice cutting apparatus having the structure of Figures 1 to 4 was employed to cut potato slices for the manufacture of potato chips. The slices were employed to produce potato chips according to the process flow chart of Figure 5.

The dimension D was set at 70mm. This dimension provided that, for the incoming potato stock, at least about 60% of the resultant potato chips were "uncut" in that they had no straight cut edges around their periphery and had not been cut longitudinally by the second cutting edge, but instead had been passed beneath the second cutting edge. The potato chips were packaged into 25gram bags using a conventional VFFS machine.

Over a significant production period the packaging waste, caused by potato chips corrupting the upper seal of the bag, was measured. The packaging waste was found to be reduced by at least about 0.5% as compared to two parallel potato chip production lines which had the same incoming potato stock and the same production and packaging machines except that the blades of the potato slice cutting head were conventional linear blades and no second cutting edge was provided.

For a large potato chip manufacturing oration, this 0.5% saving in packaging waste corresponds to millions of dollars in annual savings in production costs.

Other modifications to the potato slice cutting device of the preferred embodiments of the present invention will be readily apparent to those skilled in the art.

## Claims

1. An apparatus (2) for cutting potato slices, the apparatus (2) comprising an annular-shaped cutting head (4) and a central impeller (14) coaxially mounted for rotation within the cutting head (4) for delivering potatoes radially outwardly toward the cutting head (4), the impeller (14) having a base (16) with an upper surface (18) across which potatoes are, in use, delivered to the cutting head (4), a plurality of knives (8) serially mounted annularly around the cutting head (4), each knife (8) having a first cutting edge (10) extending substantially vertically and spaced from the cutting head (4) to provide a gap (12), extending in a radial direction, between the first cutting edge (10) and the cutting head (4), **characterised in that** each knife (8) also has a second cutting edge (36) extending substantially horizontally and extending radially at least partly across the gap (12), the second cutting edge (36) being located at least 50mm above the upper surface (18) of the impeller (14) to define a cutting zone (38) for cutting a single potato slice between the upper surface (18) of the impeller (14) and the second cutting edge (36).

2. The apparatus according to claim 1 wherein the second cutting edge (36):
is located from 60mm to 90mm, preferably from 70mm to 80mm, above the upper surface (18) of the impeller (14); and/or
is orthogonal to the first cutting edge (10); and/or is located rearwardly of the first cutting edge (10), preferably by a distance of at least 1mm, more preferably from 4 to 10 mm.

3. The apparatus according to any foregoing claim wherein in each knife (8) the first cutting edge (10) and second cutting edge (36) are formed on respective first and second knife elements (28, 40);
wherein the first knife element (28) optionally comprises an elongate substantially planar blade (30) removably clamped to the cutting head (4) by an elongate clamping member (32) mounted adjacent to the first knife element (28);
wherein when the first knife element (28) comprises an elongate substantially planar blade (30) removably clamped to the cutting head (4) by an elongate clamping member (32) mounted adjacent to the first knife element (28), the second knife element (40) optionally comprises a blade portion (42) extending substantially orthogonally from a base portion (44), the base portion (44) being removably clamped to the cutting head (4) by the elongate clamping member (32);
wherein the base portion (44) is optionally removably clamped against the first knife element (28) and/or
the elongate clamping member (32) includes a slot (46) through which extends the blade portion (42) of the second knife element (40), wherein the slot (46) is optionally a closed slot located rearwardly of a leading edge (48) of the elongate clamping member (32) and/or the elongate clamping member (32) optionally includes at least two slots (46) spaced apart in a longitudinal direction along the elongate clamping member (32), each slot (46) being provided for mounting the second knife element (40) at a respective predetermined distance from the upper surface (18) of the impeller (14).

4. A method of producing potato slices (54) for the manufacture of potato chips, the method comprising the steps of:
a. providing a plurality of potatoes;
b. feeding the potatoes to a cutting head (4) adapted to cut the potatoes into slices (54), the cutting head (4) having a plurality of knives (8);
c. delivering each potato to a respective knife (8) in the cutting head (4), the knife (8) having a first cutting edge (10) adapted to cut the potato into slices (54) and a second cutting edge (36) adapted to cut any potato slice (54) having a width greater than a predetermined dimension into two slice portions (50, 52), the two slice portions (50, 52) comprising a first slice portion (50) having a first maximum width corresponding to the predetermined dimension and a second slice portion (52) having a second maximum width smaller than the first maximum width;
d. cutting each potato into a plurality of slices (54) by the first cutting edge (10); and
e. cutting each slice (54) having a width greater than the predetermined dimension into the first and second slice portions (50, 52) by the second cutting edge (36).

5. The method according to claim 4 wherein in step b the potatoes fed to the cutting head are initially uncut and/or wherein the predetermined dimension is at least 50mm, preferably from 60mm to 90mm, more preferably from 70mm to 80mm.

6. The method according to any one of claims 4 to 5 wherein the plurality of potatoes provided in step a has a median potato diameter and the predetermined distance is greater than the median potato diameter so that at least 50%, preferably 60%, of the slices produced after cutting steps d and e are uncut.

7. The method of any one of claims 4 to 6 wherein the cutting head (4) is an annular-shaped cutting head (4) and a central impeller (14) is coaxially mounted for rotation within the cutting head (4) for delivering potatoes radially outwardly toward the cutting head (4);
wherein the impeller (14) optionally has a base (16) with an upper surface (18) across which potatoes are, in use, delivered to the cutting head (4), and the knives (8) are serially mounted annularly around the cutting head (4).

8. The method of claim 7 wherein when the impeller (14) has a base (16) with an upper surface (18) across which potatoes are, in use, delivered to the cutting head (4), and the knives (8) are serially mounted annularly around the cutting head (4) each first cutting edge (10) extends substantially vertically and is spaced from the cutting head (4) to provide a gap (12), extending in a radial direction, between the first cutting edge (10) and the cutting head (12), each second cutting edge (36) extending substantially horizontally and extending radially at least partly across the gap (12).

9. The method of claim 8 wherein each second cutting edge (36) is located at least 50mm above the upper surface (18) of the impeller (14) to define a cutting zone (38) for cutting a single potato slice between the upper surface (18) of the impeller (14) and the second cutting edge (36).

10. A method of manufacturing potato chips, the method comprising the steps of:
i. producing a plurality of potato slices by the method of any one of claims 4 to 9;
ii. cooking and seasoning the potato slices to produce flavored potato chips; and
iii. filling a measured amount of the potato chips into a package, wherein during the filling step the package has an opening presenting a maximum width dimension, and the potato chips have a maximum width which is no more than 90%, preferably no more than 80%, of the maximum width dimension of the opening.

11. A method of manufacturing potato chips, the method including the steps of:
f. providing a plurality of uncut potatoes which have been graded to provide a potato diameter distribution having a median potato diameter;
g. feeding the uncut potatoes to a cutting head (4) adapted to cut the potatoes into slices (54);
h. in the cutting head (4) cutting each potato into a plurality of slices (54); and
j. in the cutting head cutting each slice (54) having a width greater than at least the median potato diameter into first and second slice portions (50, 52) so that at least 50% of the slices (54) produced after cutting steps h and j are uncut.

12. The method according to claim 11 wherein cutting steps h and j are carried out so that at least 60% of the slices produced after cutting steps h and j are uncut; and/or
wherein in cutting step j each slice (54) having a width greater than 70mm, preferably 60mm, further preferably 50mm, is optionally cut into first and second slice portions (50, 52).

13. The method of either claim 11 or claim 12 wherein the cutting head (4) is an annular-shaped cutting head (4) and a central impeller (14) is coaxially mounted for rotation within the cutting head (4) for delivering potatoes radially outwardly toward the cutting head (4);
wherein the impeller (14) optionally has a base (16) with an upper surface (18) across which potatoes are, in use, delivered to the cutting head (4);and/or the cutting head (4) optionally has a plurality of knives (8) serially mounted annularly around the cutting head (4), each knife (8) having a first cutting edge (10) cutting the slices (54) in step h and a second cutting edge (36) cutting the slices (54) in step j;
wherein each first cutting edge (10) optionally extends substantially vertically and is spaced from the cutting head to provide a gap (12), extending in a radial direction, between the first cutting edge (10) and the cutting head (4), each second cutting edge (36) extending substantially horizontally and extending radially at least partly across the gap (12) and each second cutting edge (36) is optionally located at least 50mm above the upper surface (18) of the impeller (14) to define a cutting zone (38) for cutting a single potato slice between the upper surface (18) of the impeller and the second cutting edge (36).

14. The method according to any one of claims 4 to 13 wherein cutting steps d and e or h and j are carried out substantially simultaneously, and/or cutting step e or j cuts the slice (54) into only two slice portions (50, 52).

15. The method according to any one of claims 4 to 14, the method further comprising the step of:
k. cooking and seasoning the potato slices from cutting steps h and j to produce flavored potato chips; and
m. filling a measured amount of the potato chips into a package, wherein during the filling step the package has an opening presenting a maximum width dimension, and the potato chips have a maximum width which is no more than 90% of the maximum width dimension of the opening;
optionally wherein the potato chips have a maximum width which is no more than 80% of the maximum width dimension of the opening.

## Patentansprüche

1. Vorrichtung (2) zum Schneiden von Kartoffelscheiben, wobei die Vorrichtung (2) einen ringförmigen Schneidkopf (4) und ein zur Drehung in dem Schneidkopf (4) koaxial montiertes mittiges Laufrad (14) zum Liefern von Kartoffeln radial nach außen zum Schneidkopf (4) aufweist, wobei das Laufrad (14) eine Basis (16) mit einer oberen Oberfläche (18) hat, über die im Gebrauch Kartoffeln zum Schneidkopf (4) geliefert werden, mehrere Messer (8) in Reihe ringförmig um den Schneidkopf (4) montiert sind, jedes Messer (8) eine erste Schneide (10) hat, die im Wesentlichen vertikal verläuft und von dem Schneidkopf (4) beabstandet ist, um zwischen der ersten Schneide (10) und dem Schneidkopf (4) einen in einer radialen Richtung verlaufenden Spalt (12) bereitzustellen, **dadurch gekennzeichnet, dass** jedes Messer (8) auch eine zweite Schneide (36) hat, die im Wesentlichen horizontal verläuft und radial wenigstens teilweise über den Spalt (12) verläuft, wobei die zweite Schneide (36) wenigstens 50 mm über der oberen Oberfläche (18) des Laufrads (14) liegt, um eine Schneidzone (38) zum Schneiden einer einzelnen Kartoffelscheibe zwischen der oberen Oberfläche (18) des Laufrads (14) und der zweiten Schneide (36) zu definieren.

2. Vorrichtung nach Anspruch 1, wobei die zweite Schneide (36) :
60 mm bis 90 mm, vorzugsweise 70 mm bis 80 mm, über der oberen Oberfläche (18) des Laufrads (14) liegt; und/oder
zur ersten Schneide (10) orthogonal ist und/oder rückwärts der ersten Schneide (10) liegt, vorzugsweise um einen Abstand von wenigstens 1 mm, mehr vorzugsweise von 4 bis 10 mm.

3. Vorrichtung nach einem der vorhergehenden Ansprüche, wobei bei jedem Messer (8) die erste Schneide (10) und die zweite Schneide (36) jeweils an einem ersten bzw. einem zweiten Messerelement (28, 40) ausgebildet sind;
wobei das erste Messerelement (28) wahlweise eine längliche, im Wesentlichen ebenflächige Klinge (30) aufweist, die durch ein längliches Klemmelement (32), das an das erste Messerelement (28) angrenzend montiert ist, abnehmbar am Schneidkopf (4) festgespannt ist;
wobei, wenn das erste Messerelement (28) eine längliche, im Wesentlichen ebenflächige Klinge (30) aufweist, die durch ein längliches Klemmelement (32), das an das erste Messerelement (28) angrenzend montiert ist, abnehmbar am Schneidkopf (4) festgespannt ist, das zweite Messerelement (40) wahlweise einen Klingenteil (42) aufweist, der im Wesentlichen orthogonal von einem Basisteil (44) verläuft, wobei der Basisteil (44) durch das längliche Klemmelement (32) abnehmbar an dem Schneidkopf (4) festgespannt ist;
wobei der Basisteil (44) wahlweise abnehmbar gegen das erste Messerelement (28) festgespannt ist und/oder
das längliche Klemmelement (32) einen Spalt (46) aufweist, durch den das Klingenteil (42) des zweiten Messerelements (40) verläuft, wobei der Spalt (46) wahlweise ein geschlossener Spalt ist, der rückwärts einer Vorderkante (48) des länglichen Klemmelements (32) liegt, und/oder das längliche Klemmelement (32) wahlweise wenigstens zwei Spalten (46) beinhaltet, die in einer Längsrichtung an dem länglichen Klemmelement (32) entlang voneinander beabstandet sind, wobei jeder Spalt (46) zum Montieren des zweiten Messerelements (40) in einem jeweiligen vorbestimmten Abstand von der oberen Oberfläche (18) des Laufrads (14) bereitgestellt ist.

4. Verfahren zum Erzeugen von Kartoffelscheiben (54) zur Herstellung von Kartoffelchips, wobei das Verfahren die folgenden Schritte aufweist:
a. Bereitstellen mehrerer Kartoffeln;
b. Zuführen der Kartoffeln zu einem Schneidkopf (4), der zum Schneiden der Kartoffeln in Scheiben (54) ausgeführt ist, wobei der Schneidkopf (4) mehrere Messer (8) hat;
c. Liefern jeder Kartoffel zu einem jeweiligen Messer (8)in dem Schneidkopf (4), wobei das Messer (8) eine erste Schneide (10), die zum Schneiden der Kartoffel in Scheiben (54) ausgeführt ist, und eine zweite Schneide (36), die zum Schneiden jedweder Kartoffelscheibe (54), die eine Breite hat, die größer als eine vorbestimmte Abmessung ist, in zwei Scheibenteile (50, 52) ausgeführt ist, hat, wobei die zwei Scheibenteile (50, 52) einen ersten Scheibenteil (50) mit einer ersten maximalen Breite, die der vorbestimmten Abmessung entspricht, und einen zweiten Scheibenteil (52) mit einer zweiten maximalen Breite, die kleiner als die erste maximale Breite ist, umfassen;
d. Schneiden jeder Kartoffel mit der ersten Schneide (10) in mehrere Scheiben (54) und
e. Schneiden jeder Scheibe (54), die ein Breite hat, die größer als die vorbestimmte Abmessung ist, mit der zweiten Schneide (36) in den ersten und den zweiten Scheibenteil (50, 52).

5. Verfahren nach Anspruch 4, wobei in Schritt b die dem Schneidkopf zugeführten Kartoffel anfänglich unzerschnitten sind und/oder wobei die vorbestimmte Abmessung wenigstens 50 mm, vorzugsweise 60 mm bis 90 mm, mehr vorzugsweise 70 mm bis 80 mm ist.

6. Verfahren nach einem der Ansprüche 4 bis 5, wobei die in Schritt a bereitgestellten mehreren Kartoffel einen mittleren Kartoffeldurchmesser haben und der vorbestimmte Abstand größer als der mittlere Kartoffeldurchmesser ist, so dass wenigstens 50 %, vorzugsweise 60 % der nach den Schneidschritten d und e erzeugten Scheiben unzerschnitten sind.

7. Verfahren nach einem der Ansprüche 4 bis 6, wobei der Schneidkopf (4) ein ringförmiger Schneidkopf (4) ist und ein mittiges Laufrad (14) zur Drehung in dem Schneidkopf (4) koaxial montiert ist zum Liefern von Kartoffeln radial nach außen zum Schneidkopf (4);
wobei das Laufrad (14) wahlweise eine Basis (16) mit einer oberen Oberfläche (18) hat, über die im Gebrauch Kartoffel zum Schneidkopf (4) geliefert werden, und die Messer (8) in Reihe ringförmig um den Schneidkopf (4) montiert sind.

8. Verfahren nach Anspruch 7, wobei, wenn das Laufrad (14) eine Basis (16) mit einer oberen Oberfläche (18) hat, über die im Gebrauch Kartoffel zum Schneidkopf (4) geliefert werden, und die Messer (8) in Reihe ringförmig um den Schneidkopf (4) montiert sind, jede erste Schneide (10) im Wesentlichen vertikal verläuft und von dem Schneidkopf (4) beabstandet ist, um zwischen der ersten Schneide (10) und dem Schneidkopf (12) einen in einer radialen Richtung verlaufenden Spalt (12) bereitzustellen, wobei jede zweite Schneide (36) im Wesentlichen horizontal verläuft und radial wenigstens teilweise über den Spalt (12) verläuft.

9. Verfahren nach Anspruch 8, wobei jede zweite Schneide (36) wenigstens 50 mm über der oberen Oberfläche (18) des Laufrads (14) liegt, um eine Schneidzone (38) zum Schneiden einer einzelnen Kartoffelscheibe zwischen der oberen Oberfläche (18) des Laufrads (14) und der zweiten Schneide (36) zu definieren.

10. Verfahren zur Herstellung von Kartoffelchips, wobei das Verfahren die folgenden Schritte aufweist:
i. Erzeugen mehrerer Kartoffelscheiben mit dem Verfahren nach einem der Ansprüche 4 bis 9;
ii. Kochen und Würzen der Kartoffelscheiben zum Erzeugen gewürzter Kartoffelchips und
iii. Abfüllen einer gemessenen Menge der Kartoffelchips in eine Packung, wobei die Verpackung während des Abfüllschritts eine Öffnung hat, die eine maximale Breitenabmessung aufweist, und die Kartoffelchips eine maximale Breite haben, die höchstens 90 %, vorzugsweise höchstens 80 %, der maximalen Breitenabmessung der Öffnung ist.

11. Verfahren zur Herstellung von Kartoffelchips, wobei das Verfahren die folgenden Schritte beinhaltet:
f. Bereitstellen mehrerer unzerschnittener Kartoffeln, die sortiert wurden, um eine Kartoffeldurchmesserverteilung mit einem mittleren Kartoffeldurchmesser bereitzustellen;
g. Zuführen der unzerschnittenen Kartoffeln zu einem Schneidkopf (4), der zum Zerschneiden der Kartoffeln in Scheiben (54) ausgeführt ist;
h. Zerschneiden jeder Kartoffel in dem Schneidkopf (4) in mehrere Scheiben (54) und
j. Schneiden jeder Scheibe (54), die eine Breite hat, die größer als wenigstens der mittlere Kartoffeldurchmesser ist, in dem Schneidkopf in einen ersten und einen zweiten Scheibenteil (50, 52), so dass wenigstens 50 % der nach den Schneidschritten h und j erzeugten Scheiben (54) unzerschnitten sind.

12. Verfahren nach Anspruch 11, wobei die Schneidschritte h und j so durchgeführt werden, dass wenigstens 60 % der nach den Schneidschritten h und j erzeugten Scheiben unzerschnitten sind, und/oder
wobei bei Schneidschritt j jede Scheibe (54), die eine Breite hat, die größer als 70 mm, vorzugsweise 60 mm, weiter vorzugsweise 50 mm, ist, wahlweise in einen ersten und einen zweiten Scheibenteil (50, 52) geschnitten wird.

13. Verfahren nach Anspruch 11 oder Anspruch 12, wobei der Schneidkopf (4) ein ringförmiger Schneidkopf (4) ist und ein mittiges Laufrad (14) zur Drehung in dem Schneidkopf (4) koaxial montiert ist zum Liefern von Kartoffeln radial nach außen zum Schneidkopf (4);
wobei das Laufrad (14) wahlweise eine Basis (16) mit einer oberen Oberfläche (18) hat, über die im Gebrauch Kartoffel zum Schneidkopf (4) geliefert werden; und/oder der Schneidkopf (4) wahlweise mehrere Messer (8) hat, die in Reihe ringförmig um den Schneidkopf (4) montiert sind, wobei jedes Messer (8) eine erste, die Scheiben (54) in Schritt h schneidende Schneide (10) und eine zweite, die Scheiben (54) in Schritt j schneidende Schneide (36) hat;
wobei jede erste Schneide (10) wahlweise im Wesentlichen vertikal verläuft und von dem Schneidkopf beabstandet ist, um zwischen der ersten Schneide (10) und dem Schneidkopf (4) einen in einer radialen Richtung verlaufenden Spalt (12) bereitzustellen, jede zweite Schneide (36) im Wesentlichen horizontal verläuft und radial wenigstens teilweise über den Spalt (12) verläuft und jede zweite Schneide (36) wahlweise wenigstens 50 mm über der oberen Oberfläche (18) des Laufrads (14) liegt, um eine Schneidzone (38) zum Schneiden einer einzelnen Kartoffelscheibe zwischen der oberen Oberfläche (18) des Laufrads und der zweiten Schneide (36) zu definieren.

14. Verfahren nach einem der Ansprüche 4 bis 13, wobei die Schneidschritte d und e oder h und j im Wesentlichen gleichzeitig durchgeführt werden und/oder der Schneidschritt e oder j die Scheibe (54) in nur zwei Scheibenteile (50, 52) schneidet.

15. Verfahren nach einem der Ansprüche 4 bis 14, wobei das Verfahren ferner den folgenden Schritt aufweist:
k. Kochen und Würzen der Kartoffelscheiben aus den Schneidschritten h und j zum Erzeugen gewürzter Kartoffelchips und
m. Abfüllen einer gemessenen Menge der Kartoffelchips in eine Packung, wobei die Verpackung während des Abfüllschritts eine Öffnung hat, die eine maximale Breitenabmessung aufweist, und die Kartoffelchips eine maximale Breite haben, die höchstens 90 % der maximalen Breitenabmessung der Öffnung ist;
wobei die Kartoffelchips wahlweise eine maximale Breite haben, die höchstens 80 % der maximalen Breitenabmessung der Öffnung ist.

## Revendications

1. Appareil (2) servant à couper des tranches de pomme de terre, l'appareil (2) comprenant une tête de coupe en forme annulaire (4) et un rotor central (14) monté coaxial afin de tourner à l'intérieur de la tête de coupe (4) dans le but de fournir des pommes de terre radialement et vers l'extérieur vers la tête de coupe (4), le rotor (14) ayant une base (16) avec une surface supérieure (18) au travers de laquelle les pommes de terre sont, lors de l'utilisation, fournies à la tête de coupe (4), une pluralité de couteaux (8) montés en série de manière annulaire autour de la tête de coupe (4), chaque couteau (8) ayant une première arête coupante (10) qui se prolonge sensiblement à la verticale et qui est espacée de la tête de coupe (4) pour ménager un espace (12), se prolongeant dans une direction radiale, entre la première arête coupante (10) et la tête de coupe (4), **caractérisé en ce que** chaque couteau (8) a aussi une deuxième arête coupante (36) qui se prolonge sensiblement à l'horizontale et qui se prolonge radialement au moins en partie en travers de l'espace (12), la deuxième arête coupante (36) étant située à au moins 50 mm au-dessus de la surface supérieure (18) du rotor (14) pour définir une zone de coupe (38) afin de couper une seule tranche de pomme de terre entre la surface supérieure (18) du rotor (14) et la deuxième arête coupante (36).

2. Appareil selon la revendication 1, dans lequel la deuxième arête coupante (36) :
est située de 60 mm à 90 mm, de préférence de 70 mm à 80 mm, au-dessus de la surface supérieure (18) du rotor (14) ; et/ou
est orthogonale à la première arête coupante (10) ; et/ou est située à l'arrière de la première arête coupante (10), de préférence à une distance d'au moins 1 mm, de façon plus préférentielle de 4 à 10 mm.

3. Appareil selon l'une quelconque des revendications précédentes, dans lequel dans chaque couteau (8), la première arête coupante (10) et la deuxième arête coupante (36) sont formés sur des éléments respectifs de premier et deuxième couteau (28, 40) ;
dans lequel le premier élément de couteau (28) comprend facultativement une lame allongée sensiblement plane (30) fixée de manière amovible à la tête de coupe (4) par un organe de fixation allongé (32) monté adjacent au premier élément de couteau (28) ;
dans lequel quand le premier élément de couteau (28) comprend une lame allongée sensiblement plane (30) fixée de manière amovible à la tête de coupe (4) par un organe de fixation allongé (32) monté adjacent au premier élément de couteau (28), le deuxième élément de couteau (40) comprend facultativement une partie de lame (42) qui se prolonge sensiblement de manière orthogonale à partir d'une partie de base (44), la partie de base (44) étant fixée de manière amovible à la tête de coupe (4) par l'organe de fixation allongé (32) ;
dans lequel la partie de base (44) est fixée facultativement de manière amovible contre le premier élément de couteau (28) et/ou
l'organe de fixation allongé (32) comprend une fente (46) au travers de laquelle se prolonge la partie de lame (42) du deuxième élément de couteau (40), dans lequel la fente (46) est facultativement une fente fermée située à l'arrière d'une arête avant (48) de l'organe de fixation allongé (32) et/ou l'organe de fixation allongé (32) comprend facultativement au moins deux fentes (46) espacées dans une direction longitudinale le long de l'organe de fixation allongé (32), chaque fente (46) étant prévue pour monter le deuxième élément de couteau (40) à une distance prédéterminée respective de la surface supérieure (18) du rotor (14).

4. Procédé de production de tranches de pomme de terre (54) servant à la fabrication de pomme chips, le procédé comprenant les étapes consistant â :
a. fournir une pluralité de pommes de terre ;
b. alimenter les pommes de terre à une tête de coupe (4) conçue pour couper les pommes de terre en tranches (54), la tête de coupe (4) ayant une pluralité de couteaux (8) ;
c. fournir chaque pomme de terre à un couteau respectif (8) dans la tête de coupe (4), le couteau (8) ayant une première arête coupante (10) conçue pour couper la pomme de terre en tranches (54) et une deuxième arête coupante (36) conçue pour couper toute tranche de pomme de terre (54) ayant une largeur supérieure à une dimension prédéterminée en deux parties de tranches (50, 52), les deux parties de tranches (50, 52) comprenant une première partie de tranche (50) ayant une première largeur maximale correspondant à la dimension prédéterminée et une deuxième partie de tranche (52) ayant une deuxième largeur maximale plus petite que la première largeur maximale ;
d. couper chaque pomme de terre en une pluralité de tranches (54) par la première arête coupante (10) ; et
e. couper chaque tranche (54) ayant une plus grande largeur que la dimension prédéterminée en la première et la deuxième parties de tranches (50, 52) par la deuxième arête coupante (36).

5. Procédé selon la revendication 4, dans lequel à l'étape b les pommes de terre alimentées dans la tête de coupe sont initialement non coupées et/ou dans lequel la dimension prédéterminée est d'au moins 50 mm, de préférence de 60 à 90 mm, de manière plus préférentielle de 70 mm à 80 mm.

6. Procédé selon l'une quelconque des revendications 4 à 5, dans lequel la pluralité de pommes de terre fournie à l'étape a a un diamètre de pomme de terre moyen et la distance prédéterminée est supérieure au diamètre de pomme de terre moyen pour que au moins 50 %, de préférence 60 %, des tranches produites après les étapes de coupe d et e ne soient pas coupées.

7. Procédé selon l'une quelconque des revendications 4 à 6, dans lequel une tête de coupe est une tête de coupe (4) de forme annulaire (4) et un rotor central (14) est monté coaxial pour tourner à l'intérieur de la tête de coupe (4) afin de fournir des pommes de terre radialement vers l'extérieur vers la tête de coupe (4) ;
dans lequel le rotor (14) a facultativement une base (16) avec une surface (18) au travers de laquelle les pommes de terre sont, lors de l'utilisation, fournies à la tête de coupe (4), et les couteaux (8) sont montés en série de manière annulaire autour de la tête de coupe (4).

8. Procédé selon la revendication 7, dans lequel quand le rotor (14) a une base (16) avec une surface supérieure (18) au travers de laquelle les pommes de terre sont, lors de l'utilisation, fournies à la tête de coupe (4), et les couteaux (8) sont montés en série de manière annulaire autour de la tête de coupe (4), chaque première arête coupante (10) se prolonge sensiblement à la verticale et est espacée de la tête de coupe (4) pour ménager un espace (12), se prolongeant dans une direction radiale, entre la première arête coupante (10) et la tête de coupe (12), chaque deuxième arête coupante (36) se prolongeant sensiblement à l'horizontale et se prolongeant radialement au moins en partie en travers de l'espace (12).

9. Procédé selon la revendication 8, dans lequel chaque deuxième arête coupante (36) est située à au moins 50 mm au-dessus de la surface supérieure (18) du rotor (14) pour définir une zone de coupe (38) afin de couper une seule tranche de pomme de terre entre la surface supérieure (18) du rotor (14) et la deuxième arête coupante (36).

10. Procédé de fabrication de pomme chips, le procédé comprenant les étapes consistant à :
i. produire une pluralité de tranches de pomme de terre par le procédé de l'une quelconque des revendications 4 à 9 ;
ii. cuire et assaisonner les tranches de pomme de terre pour produire des pommes chips aromatisées ; et
iii. remplir un emballage avec une quantité mesurée de pommes chips, dans lequel, au cours de l'étape de remplissage, l'emballage a une ouverture présentant une dimension de largeur maximum, et les pommes chips ont une largeur maximum qui n'est pas supérieure à 90 %, de préférence pas supérieure à 80 % de la dimension de largeur maximum de l'ouverture.

11. Procédé de fabrication de pomme chips, le procédé comprenant les étapes consistant à :
f. fournir une pluralité de pommes de terre non coupées qui ont été calibrées pour donner une répartition de diamètre de pommes de terre ayant un diamètre de pomme de terre moyen ;
g. alimenter les pommes de terre non coupées à une tête de coupe (4) conçue pour couper les pommes de terre en tranches (54) ;
h. dans la tête de coupe (4) couper chaque pomme de terre en une pluralité de tranches (54) ; et
j. dans la tête de coupe couper chaque tranche (54) ayant une largeur plus grande que au moins le diamètre moyen de pomme de terre en des première et deuxième parties de tranche (50, 52) pour que au moins 50 % des tranches (54) produites après les étapes de coupe h et j ne soient pas coupées.

12. Procédé selon la revendication 11, dans lequel les étapes de coupe h et j sont effectuées de manière à ce que au moins 60 % des tranches produites après les étapes de coupe h et j ne soient pas coupées ; et/ou
dans lequel à l'étape de coupe j chaque tranche (54) ayant une largeur supérieure à 70 mm, de préférence 60 mm, de manière plus préférentielle 50 mm, est facultativement coupée en des première et deuxième parties de tranche (50, 52).

13. Procédé selon la revendication 11 ou 12, dans lequel une tête de coupe est une tête de coupe (4) de forme annulaire (4) et un rotor central (14) est monté coaxial pour tourner à l'intérieur de la tête de coupe (4) afin de fournir des pommes de terre radialement vers l'extérieur vers la tête de coupe (4) ;
dans lequel le rotor (14) a facultativement une base (16) avec une surface supérieure (18) au travers de laquelle les pommes de terre sont, lors de l'utilisation, fournies à la tête de coupe (4) ;et/ou la tête de coupe (4) a facultativement une pluralité de couteaux (8) montés en série de manière annulaire autour de la tête de coupe (4), chaque couteau (8) ayant une première arête coupante (10) coupant les tranches (54) à l'étape h et une deuxième arête coupante (36) coupant les tranches (54) à l'étape j ;
dans lequel chaque première arête coupante (10) se prolonge facultativement sensiblement à la verticale et est espacée de la tête de coupe pour réaliser un espace (12), se prolongeant dans une direction radiale, entre la première arête coupante (10) et la tête de coupe (4), chaque deuxième arête coupante (36) se prolongeant sensiblement à l'horizontale et se prolongeant radialement au moins en partie en travers de l'espace (12) et chaque deuxième arête coupante (36) est située facultativement à au moins 50 mm au-dessus de la surface supérieure (18) du rotor (14) pour définir une zone de coupe (38) afin de couper une seule tranche de pomme de terre entre la surface supérieure (18) du rotor et la deuxième arête coupante (36).

14. Procédé selon l'une quelconque des revendications 4 à 13, dans lequel les étapes de coupe d et e ou h et j sont effectuées sensiblement simultanément, et/ou l'étape e ou j coupe la tranche (54) en seulement deux parties de tranche (50, 52).

15. Procédé selon l'une quelconque des revendications 4 à 14, le procédé comprenant les étapes consistant à :
k. cuire et assaisonner les tranches de pomme de terre à partir des étapes h et j pour produire des pommes chips aromatisées ; et
m. remplir un emballage avec une quantité mesurée de pommes chips, dans lequel, au cours de l'étape de remplissage, l'emballage a une ouverture présentant une dimension de largeur maximum, et les pommes chips ont une largeur maximum qui n'est pas supérieure à 90 % de la dimension de largeur maximum de l'ouverture ;
dans lequel facultativement les pommes chips ont une largeur maximum qui n'est supérieure à 80% de la dimension de largeur maximum de l'ouverture.
